Europäisches Patentamt

European Patent Office

Office européen des brevets

(19)

(11) Publication number: 0 363 665 A1

# (12) EUROPEAN PATENT APPLICATION

(21) Application number: 89116947.6

(22) Date of filing: 13.09.89

(51) Int. Cl.5: A23B 5/00

(30) Priority: 23.09.88 IT 2205088

(43) Date of publication of application:
18.04.90 Bulletin 90/16

(84) Designated Contracting States:
BE DE FR GB IT NL

(71) Applicant: Fantolino, Claudio
Corso Grosseto 252
I-10148 Torino(IT)

(72) Inventor: Fantolino, Claudio
Corso Grosseto 252
I-10148 Torino(IT)

(74) Representative: Giambrocono, Alfonso, Dr.
Ing. et al
Ing. A. Giambrocono & C. S.r.l. Via Rosolino
Pilo 19/B
I-20129 Milano(IT)

(54) A process and device for deactivating the bacteria present in egg product or a mixtures of eggs with other ingredients, to obtain a considerable product life.

(57) A process for treating an egg product comprising yolk and/or albumen, according to which the product is mixed with a fluid mass of inert gas able to eliminate or reduce the damaging action which the ultraviolet rays could exercise on the product, after which the mixture consisting of the product and fluid mass is traversed by ultraviolet rays having sterilizing action.

The device comprises a mixer unit (62) connected to a unit (53) in which the mixture composed of the egg product and fluid mass is traversed by ultraviolet rays.

EP 0 363 665 A1

FIG 2

**A process and device for deactivating the bacteria present in egg product or in mixtures of eggs with other ingredients, to obtain a considerable product life**

In a preceding patent application GB N° 2198077A filed on 14 May 1987 a process and a device are described for the processing of egg product (albumen, yolk or both) or relative compounds, essentially for the purpose of subjecting the egg product to an antibacterial action such as to reduce the possibility of development (or multiplication) of the bacteria present in the egg, in order to prolong the life of the egg product.

In a device (consisting of a series of plant units connected together) there is provided inter alia an apparatus which during a certain stage of the cycle is traversed by the egg product which undergoes inter alia an antibacterial action in said apparatus. The object of the present invention is to obtain further advantageous results, ie to provide means for a more effective antibacterial action.

It was initially thought to pass ultraviolet rays through the egg product so that these would exercise an antibacterial action.

It was however found that although on the one hand such rays effectively exercise the desired action, on the other hand they also exercise an undesirable action which to some extent damages the egg product. It was therefore thought to subject the egg product, before its treatment with ultraviolet rays, to a treatment designed to eliminate or considerably reduce said damaging effect. The process according to the present invention was therefore conceived, which is characterised essentially in that before undergoing treatment with ultraviolet rays the egg product is mixed with an inert gas able to eliminate or considerably reduce the damaging effects which the ultraviolet rays could produce on the product, the product-gas mixture then being subjected after this operation to the action of ultraviolet rays.

According to the invention it has been found that a particularly suitable gas is carbon dioxide ($CO_2$) or a mixture of carbon dioxide ($CO_2$) and nitrogen ($N_2$).

Preferably, this operation for forming a mixture of egg product and gas is effected downstream of a station in which the product pasteurization is carried out.

These and other characteristics of the process and device according to the present invention will be more apparent from the description of some embodiments thereof give hereinafter with reference to the accompanying drawing in which:

Figure 1 shows in schematic form a plant already described in the aforesaid application GB2191077A;

Figure 2 shows in schematic form a device according to the present invention;

Figure 3 is a separate view of the essential details of a mixer which is indicated in entirely schematic form in Figure 2;

Figure 4 is a section through Figure 3 on the plane perpendicular to the geometrical axis of the (cylindrical) mixer;

Figure 5 shows a modification of the mixer;

Figure 6 is a separate sectional detailed view of the ultraviolet ray apparatus which is indicated in entirely schematic form in Figure 2 and described in the former application GB 2191077A;

Figure 7 is a section on the line VII-VII of Figure 6.

The device shown in Figure 1 (the subject of the preceding patent application GB 2191077A) comprises a series of plant units which are described in detail in said prior application and therefore simply summarized hereinafter.

In station 1 the whole eggs (including shells) are cooled, then in station 2 the eggs (ie their shells) are washed; said shells are sterilized in station 3 and then mechanically broken in station 4. If required, the eggs are separated into their two components (yolk and albumen) in station 5.

Station 6 receives only yolk, station 7 receives yolk and albumen together, and station 8 receives only albumen.

In other words it is possible to choose whether to proceed to process only yolk, only albumen, yolk and albumen together, or mixtures of egg with other products.

If yolk and albumen together are to be used the separator in station 5 is not employed.

If only yolk is to be used an ultrafiltration unit is provided in station 9 to remove any excess water from the yolk.

A station 10 is also provided for homogenization, stabilization and cooling operations.

There are also a filtration unit in station 11 and a product pasteurization unit in station 12.

Pasteurization is effected particularly in the case of the yolk, by suitably heating the product in the unit of station 12.

A gaseous mixture comprising air and other gases and possibly free water fractions is expelled from the product in the unit of station 13.

Elimination of air (and other gases, and in particular $O_2$) is advantageous in that the air can lead to both oxidation and bacterial growth.

The elimination of free water is advantageous, it being known that water favours proliferation of bacteria.

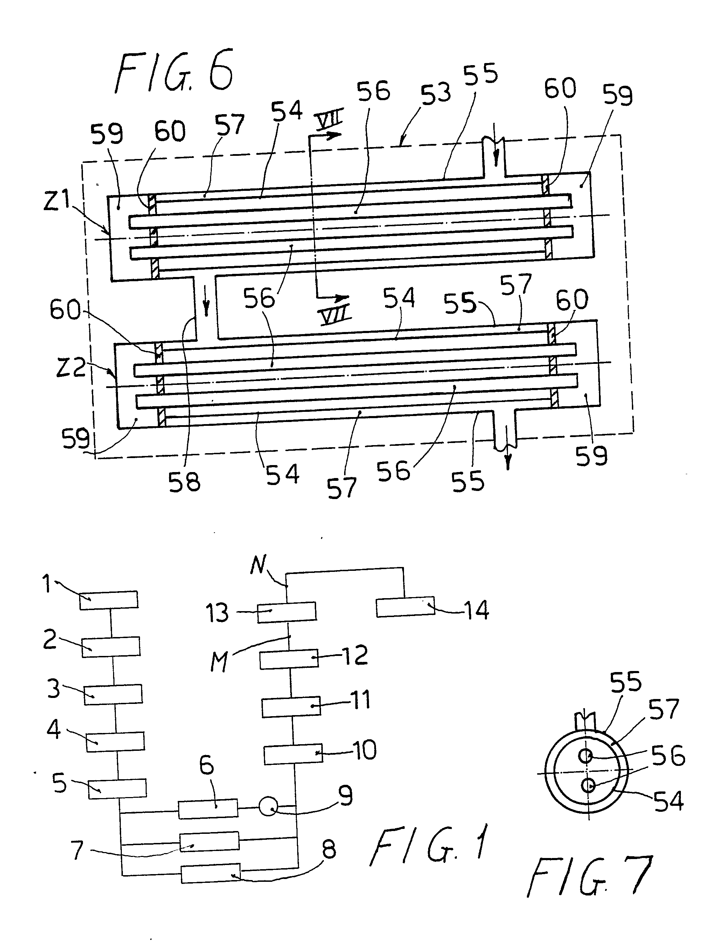

According to the present invention there is inserted between the station 13 and the packaging station 14 an apparatus combination (see Figure 2) which considerably improves results and lead to an egg product of longer life.

Said apparatus combination includes a unit (of ultraviolet ray operation, see GB 2191077A) indicated in the overall diagram (of Figure 2) by 53 and shown in detail in Figures 6 and 7.

A mixer 62 and pump 63 (for example a steel lobe pump) are also provided, this latter being arranged to feed the egg product to said mixer 62, from which the product (suitably mixed with appropriate gas) is fed to the unit 53 and finally to position 14 for packaging. The gas passes from a suitable source to reach (see Figure 2) a shutoff system 64 after passing through a gas pressure regulator indicated by 65.

Between said shutoff system 64 and said pump 63 there is a solenoid valve 66, the purpose of which is described hereinafter.

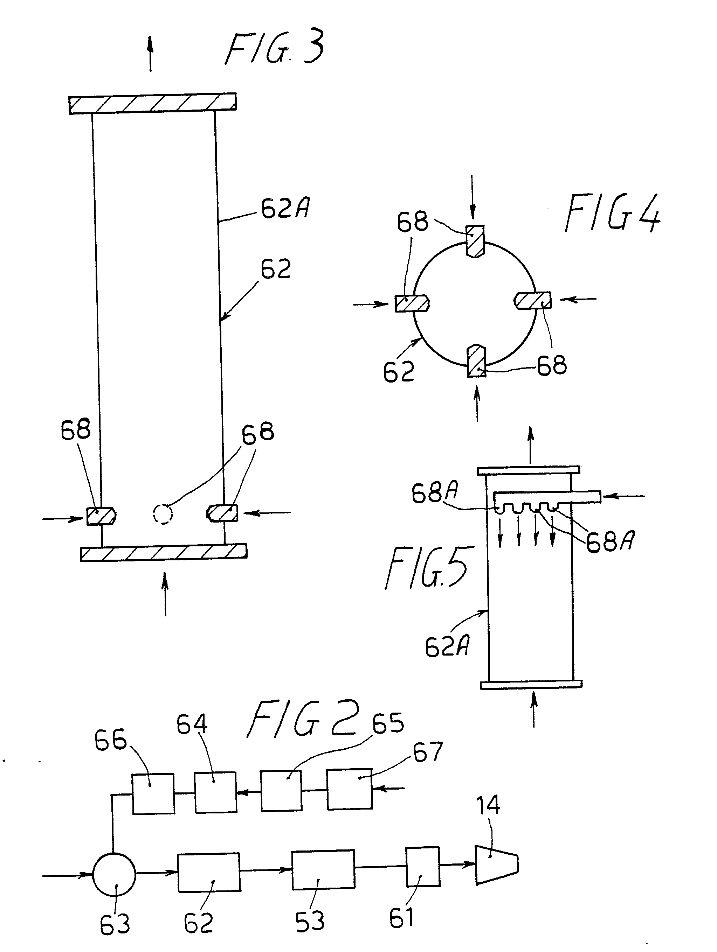

The said mixer 62, which is shown in detail in Figures 3 and 4 (by way of example), consists essentially of a stainless steel tube 62A having a length preferably (but not essentially) of between 50 and 100 cm and a diameter (preferably but not necessarily) of between 28 and 40 mm (the dimensions can vary in accordance with the product throughput). The tube 62A (in the present example) is positioned vertically.

The product (fed by the pump 63) enters said tube 62A at the bottom and leaves at the top towards the ultraviolet ray unit 53.

At a height (for example) of between 5 and 10 cm from the base of the tube 62A there are disposed a number of nozzles 68 through which the gas to be mixed with the product (gas from the regulator 65) is fed (into the tube 62A). In the present example (Figures 3 and 4) there are four nozzles disposed symmetrically (however their number can be different).

Filter sterilizers 67 and a storage tank 61, described hereinafter, are also provided.

The operation of the described device, comprising the mixer 62, ultraviolet ray unit 53, pump 63 and the other components 61, 64, 65, 66 and 67, is essentially as follows.

The egg product from the station 13 is fed by the pump 63 to the mixer 62 (shown schematically in Figure 2 and in detail in Figures 3 and 4).

The gas passes through the filters 67, pressure regulator 65 and shutoff system 64 to enter the mixer 62 through the nozzles 68.

The gas in question is carbon dioxide (ie $CO_2$) generally of 100% purity, or a mixture of $CO_2$ and $N_2$.

For example, a mixture which gives very good results consists of 35% $CO_2$ and 65% $N_2$.

Carbon dioxide ($CO_2$) is very useful in neutralizing the oxidising action of the ultravioled rays on the egg lipid fraction.

In practice, only complete and intimate mixing of said gas ($CO_2$) with the egg product can give the product adequate protection against the action of ultraviolet rays (protection both from ozone and from other oxidative phenomena).

Because of its action on enzymes such as decarboxylase and lipase, the presence of nitrogen ($N_2$) in the mixture helps to considerably retard lipid oxidation in a synergic process with the $CO_2$. As the lipid fraction is high in egg product (30% in yolk, 12% overall), the stability and thus the life of such product benefits.

As the gases used either pure or in mixture must be debacterialized, the aforesaid filter sterilizer unit 67 is provided (Figure 2).

As stated heretofore, the egg product enters the mixer 62 (from below), the gas ($CO_2$ or a $CO_2$ + $N_2$ mixture) being fed into said mixer through the nozzles 68 (also positioned at the bottom).

Complete and intimate mixing between the gas and product takes place in said mixer, the resultant mixture leaving the mixer from the top for feed to the ultraviolet ray unit 53.

The gas pressure is suitably regulated (for example between 1.5 and 3 atm) depending on the egg product treated (for example 1.5 for albumen, 2 for whole egg, 3 for yolk).

The gas flow must be sufficiently high (in terms of nl/min) to create a "boiling" effect on the product within the mixer.

For this purpose the feed nozzles must have an orifice diameter which allows abundant flow while favouring gas dispersion within the product (the formation of bubbles which pass through the product with minimum effect must be avoided).

To increase the gas-product mixing effect it can be useful to provide within the mixer tube intersecting blades of particular geometry, to make the product passage more swirling.

On leaving the mixer 62 the gas-product mixture passes to the ultraviolet ray unit 53 (shown schematically in Figure 2 and in detail in Figures 6 and 7 and disclosed in aforesaid GB 2191077A). For the reader convenience, the unit 53 is composed of two equal parts, indicated in Figure 6 by Z1 and Z2 respectively. Each of said parts comprises a tubular body 55 preferably of stainless steel, and a second tubular body 54 inside said body 55 and coaxial to it.

The body 54 is of a material transparent to ultraviolet rays, preferably quartz.

There is an interspace 57 between the two tubes.

Two lamps 56 for emitting ultraviolet rays are provided in the tube 54.

The reference numeral 59 indicates the protection covers for the electrical connections and the seal elements provided to prevent leakage of the product.

The reference numeral 58 indicates a tube which connects the two interspace 57 of the two parts Z1 and Z2 together.

The mixture of egg product and gas enters (as indicated by the arrow in Figure 6) the part Z1 of the unit 53 and flows through the interspace 57 between the cylindrical walls 54 and 55 of said part Z1.

Consequently said mixture is exposed to the ultraviolet rays originating from the lamps 56 of said part 1.

The mixture passes through the tube 58 into the part Z2 of the unit 53,. ie into an analogous interspace, and is exposed to the ultraviolet rays originating from the lamps 56 of said part Z2. The wavelength of the ultraviolet rays is for example 2537 Angstrom.

The mixture finally leaves the part Z2 (ie unit 53) and passes to packaging in the station 14.

The $CO_2$ gas (or gaseous $CO_2 + N_2$ mixture) which has been incorporated into the egg product by the aforedescribed system escapes readily on leaving the ultraviolet ray unit 53 because of the product temperature (for example 15-18° C) during its treatment. To allow this, a storage tank 61 is provided between the unit 53 and the packaging station 14.

According to a possible modification the gas (in the mixer) can be made to flow countercurrently to the product to further improve mixing, by arranging the nozzles directly inside the mixer as shown in Figure 5, in which the mixer is indicated by 62A and the nozzles by 68A.

## Claims

1. A process for treating egg product such as yolk, albumen, yolk and albumen together, or a compound of yolk and/or albumen with other ingredients, characterised in that the egg product is mixed, preferably downstream of the pasteurization stage, with a fluid mass, generally a gas or vapour, able to eliminate or reduce the damaging action which the ultraviolet rays could exercise on the product, after which the mixture consisting of the product and said fluid mass is traversed by ultraviolet rays having sterilizing action.

2. A process as claimed in claim 1, characterised in that said fluid mass which is mixed with the egg product is carbon dioxide ($CO_2$), generally at 100% purity.

3. A process as claimed in claim 1, characterised in that said fluid mass which is mixed with the egg product is a mixture of carbon dioxide ($CO_2$) and nitrogen ($N_2$), said mixture advantageously consisting of 35% carbon dioxide ($CO_2$) and 65% nitrogen ($N_2$).

4. A process as claimed in claim 1, characterised in that the product is freed of said fluid mass such as, in particular, carbon dioxide ($CO_2$) or a mixture of carbon dioxide ($CO_2$) and nitrogen ($N_2$) downstream of the station in which the egg product is traversed by the ultraviolet rays.

5. A device for implementing the method claimed in claim 1, characterised in that to mix said egg product with said fluid mass, such as, in particular, carbon dioxide ($CO_2$) or a mixture of carbon dioxide ($CO_2$) and nitrogen ($N_2$), there is provided a mixer unit (62) connected to a unit (53) in which the mixture composed of the egg product and said fluid mass is traversed by the ultraviolet rays.

6. A device as claimed in claim 5, characterised in that said mixer unit (62) comprises a preferably cylindrical enclosure (62A) in which the egg product enters from below and leaves at the top directed towards the ultraviolet ray unit (53), means comprising nozzles (68) being provided to feed carbon dioxide ($CO_2$) and nitrogen ($N_2$) into said enclosure (62A).

7. A device as claimed in claim 6, characterised in that said nozzles (68) are situated in correspondence with the lower part of said enclosure.

8. A device as claimed in claim 6, characterised in that said nozzles (68A) are positioned inside said enclosure (62A) in the upper part thereof, to inject the gas downwards so that it mixes with the egg product which is travelling upwards within said enclosure.

9. A device as claimed in claim 5, characterised in that a pump (63) is provided for feeding the egg product from the pasteurization stage to said mixer (62), said pump (63) being connected to a solenoid valve (66) which is connected to a gas shutoff system connected to the mixer (62), there also being provided a gas pressure regulator (65) connected to said gas shutoff system (64).

10. A device as claimed in claim 5, characterised in that downstream of said mixer unit there is provided an ultraviolet ray unit (53) of the type described in the previous GB 2191077A.

11. A device as claimed in claim 10, characterised in that downstream of said ultraviolet ray unit and upstream of the packaging station (14) there is provided a storage tank (61) within which the gas such as carbon dioxide ($CO_2$) or a mixture of carbon dioxide ($CO_2$) and nitrogen ($N_2$) is released from the product.

# FIG. 6

Z1

Z2

59 60 57 54 VII 56 53 55 60 59

60

59

58 54 57 56 55 59

56 VII 54 55 57 60

N

1

2

3

4

5

6

7

8

13

M 12

11

10

9

14

# FIG. 1

55

57

56

54

# FIG. 7

FIG. 3

FIG 4

FIG.5

FIG 2

European Patent
Office

# EUROPEAN SEARCH REPORT

Application Number

EP 89 11 6947

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,D | GB-A-2 191 077 (C. FANTOLINO) * Fig. 9-10,1,2,4; page 2, 1. 124 - page 3, 1. 29; page 3, 1. 91-127; page 4, 1. 5-10; cl. 1,2 * | 1,2,5, 10 | A 23 B 5/00 |
| Y | | 3,4 | |
| Y | US-A-2 725 482 (S.O. LEVINSON et al.) * Col. 2, 1. 20-29; col. 5, 1. 44-47; fig. 1,2 * | 3,4 | |
| A | EP-A-0 269 941 (S. STRIGLIA) | | |
| A | FR-A- 400 602 (V. HENRI et al.) * Page 1, 1. 27-32; page 2, 1. 21-28; fig. 1 * | 1,2,3,4 | |
| A | FR-A- 893 558 (R. GALLOIS) * Résumé 1,4; page 2, 1. 32-39; fig. 1 * | 1-4 | |
| A | FR-A- 851 421 (HERMES) | | TECHNICAL FIELDS SEARCHED (Int. Cl.5) |
| A | FR-A-1 101 958 (M. BAROIN) | | A 23 B |
| A | FR-A-1 126 278 (E. HEIREND) | | A 23 L |

The present search report has been drawn up for all claims

| Place of search | Date of completion of the search | Examiner |
|---|---|---|
| THE HAGUE | 15-01-1990 | GUYON R.H. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)